# EUROPÄISCHE PATENTSCHRIFT

(11) **EP 1 975 095 B1**
(45) Veröffentlichungstag und Bekanntmachung des Hinweises auf die Patenterteilung: **24.08.2011**
(21) Anmeldenummer: 08450044.6
(22) Anmeldetag: 28.03.2008
(51) Int. Cl.: B65G 47/252

(54) **Wender**
Separator
Tournebroche

(30) Priorität: 29.03.2007 AT 4932007
(43) Veröffentlichungstag der Anmeldung: 01.10.2008
(73) Patentinhaber: Springer Maschinenfabrik AG, 9360 Friesach (AT)
(72) Erfinder: Widu, Kurt, 9300 St. Veit/Glan (AT)
(74) Vertreter: Gibler & Poth Patentanwälte OG

(56) Entgegenhaltungen:
- EP-A- 1 225 139
- EP-A- 1 407 990
- EP-A- 1 454 854
- US-A1- 2005 077 150

## Beschreibung

Die Erfindung betrifft einen Wender zum Wenden von länglichem Stückgut im Quertransport, insbesondere Platten, Leisten und/oder Brettern, umfassend einen Aufnahmebereich zur Aufnahme des Stückgutes, einen Austrittsbereich zum Austritt des Stückgutes, eine erste Stückgutführung zur Führung einer ersten Seite des Stückgutes von dem Aufnahmebereich zu dem Austrittsbereich, wobei die erste Stückgutführung wenigstens bereichsweise als geschlossene Struktur ausgebildetes erstes Fördermittel ausgebildet ist, sowie zumindest ein lagefestes Abstützmittel zur Abstützung des ersten Fördermittels, wobei das erste Fördermittel gegenüber dem Abstützmittel bewegbar ausgebildet ist, wobei - in Betriebslage gesehen - das Stückgut vom Aufnahmebereich mit der ersten Seite nach unten aufnehmbar ist und im Austrittsbereich mit der ersten Seite nach oben ausgebbar ist, und wobei das zumindest eine lagefeste Abstützmittel benachbart zur Stückgutführung ausgebildet ist.

Die EP 1 407 990 A beschreibt eine Wendevorrichtung, wobei auf einer zentralen Welle wenigstens zwei Scheiben angeordnet sind.

Die EP 1 225 139 A zeigt eine Wendevorrichtung zum Wenden von Stückgut, wobei der Wender einen Greifer aufweist,

Die US 2005/077 150 A behandelt einen Wender zum Wenden von Kartoffelchips. Zum Wenden von Paketen eignet sich insbesondere ein Wender gemäß der EP 1 454 854 A.

Es ist bekannt, längliches Stückgut im Quertransport in einer ersten Förderebene zum Wender zu transportieren und - unterhalb der ersten Förderebene - in einer zweiten Förderebene dieses Stückgut vom Wender abzutransportieren. Der Wender umfasst ein Förderrad, welches einen Durchmesser im Wesentlichen entsprechen dem vertikalen Abstand der beiden Förderebenen entspricht. Die erste Seite des Stückgutes wirkt beim Durchtritt durch den Wender mit dem Förderrad zusammen. Derart ist die erste Seite des Stückgutes beim Eintritt in den Wender nach unten gerichtet und beim Austritt aus dem Wender nach oben gerichtet. Das Stückgut wurde entlang dessen Längserstreckung um 180° gewendet.

Nachteilig daran ist, dass die beiden Förderebenen bis zu 4m beabstandet ausgebildet sind und dabei das Förderrad einen Durchmesser von bis zu 4m aufweisen muss. Das Förderrad ist schwer, sowie unhandlich bei der Montage und beim Transport. Aufgrund der Masse ist die Belastung des zentralen Lagers des Förderrades hoch Ebenso ist die Gefahr von Unwucht des Förderrades und dadurch auftretende Schwingungen des Wenders hoch. Um das Problem des unhandlichen Transportes zu umgehen wurde vorgeschlagen, das Förderrad mehrstückig auszubilden und erst im Wender zusammenzubauen. Derart steigt jedoch die Gefahr von Unwucht und die Fehleranfälligkeit der Wendeanlage.

Aufgabe der Erfindung ist es daher einen Wender der eingangs genannten Art anzugeben, mit welchem die genannten Nachteile vermieden werden können, mit welchem der Transport vereinfacht und dabei die Gefahr von unwuchtbedingten Schwingungen des Wenders verringert wird.

Erfindungsgemäß wird dies durch die Merkmale des Patentanspruches 1 erreicht.

Dadurch ist die lagefeste Abstützung im Bereich der ersten Stückgutführung ausgebildet und die im Wender bewegten Massen werden reduziert. Damit wird im Betrieb auftretende Unwucht vermieden. Die Lager des Wenders und der Fördermittel werden weniger belastet, wodurch die Lebensdauer des Wenders erhöht werden kann. Der Wender kann darüber hinaus auch leichter und kostenschonender hergestellt werden, was auch den Transport und die Montage des Wenders vereinfacht.

Das Fördermittel kann in Vergleich zum Abstand der beiden Förderebenen schmal ausgebildet sein. Dadurch kann das Fördermittel mit geringer Massen ausgebildet sein, sodass das Gewicht des Wenders weiter reduziert werden kann. Auch wenn das Fördermittel im Betrieb bewegt ausgeführt wird, kann durch das geringe Gewicht dieses die Gefahr von Unwucht gering gehalten werden. Mit dem sinkenden Gewicht des Fördermittels sinkt ebenso die Belastung der Abstützung und die Einsatzdauer dieser Abstützung kann erhöht werden. Derart kann auch die Lebenserwartung der Wendeanlage weiter erhöht werden.

Die lagefeste Abstützung und das Fördermittel können einfach und kostenschonend an die geometrischen Anforderungen des Wenders angepasst werden. Dadurch kann die Abstützung und das Fördermittel auch in bereits bestehenden Wendeanlagen verbaut und betrieben werden und auf eine Anpassung der Wendeanlage an die lagefeste Abstützung ist im Wesentlichen verzichtet werden, wodurch können Umrüstungskosten und Wartungskosten gesenkt werden.

Im Unterschied zu einem Wender umfassend das Förderrad kann die erste Stückgutführung in deren Geometrie - gesehen in der Seitenansicht der Betriebslage des Wenders - von der Halbkreisform abweichen. Die Geometrie der Stückgutführung kann derart besser den individuellen Anforderungen des Stückgutes angepasst werden. Derart kann der Durchsatz, die Betriebssicherheit und die Produktivität des Wenders gesteigert werden. Darüberbinaus kann die Auftrittswahrscheinlichkeit von Fehlfunktionen gesenkt werden, sodass ebenso die Anzahl der durch den Wender verursachten Beschädigungen des Stückgutes minimiert werden kann. Der Prozessschritt des Wendens des Stückgutes kann derart kostenschonender und effizienter gestaltet werden.

Die Unteransprüche, welche ebenso wie der Patentanspruch 1 gleichzeitig einen Teil der Beschreibung bilden, betreffen weitere vorteilhafte Ausgestaltungen der Erfindung.

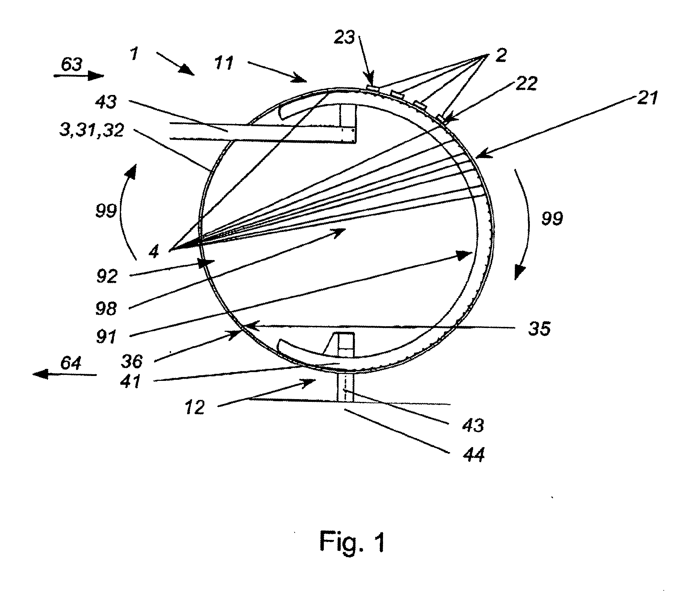

Die Erfindung wird unter Bezugnahme auf die beigeschlossene Zeichnung, in welcher eine bevorzugte Ausführungsform beispielhaft dargestellt ist, näher beschrieben. Dabei zeigt die Fig. 1 einen Wender einer vorteilhaften Ausführungsform in schematischer Darstellung im Seitenriss.

Die Fig. 1 zeigt einen Wender 1 zum Wenden von länglichem Stückgut 2 im Quertransport, insbesondere Platten, Leisten und/oder Brettern, umfassend einen Aufnahmebereich 11 zur Aufnahme des Stückgutes 2, einen Austrittsbereich 12 zum Austritt des Stückgutes 2, eine erste Stückgutführung 21 zur Führung einer ersten Seite 22 des Stückgutes 2 von dem Aufnahmebereich 11 zu dem Austrittsbereich 12, wobei die erste Stückgutführung 21 wenigstens bereichsweise als erstes Fördermittel 3 ausgebildet ist, sowie zumindest ein lagefestes Abstützmittel 4 zur Abstützung des ersten Fördermittels 3, wobei - in Betriebslage gesehen - das Stückgut 2 vom Aufnahmebereich 11 mit der ersten Seite 22 nach unten aufnehmbar ist und im Austrittsbereich 12 mit der ersten Seite 22 nach oben ausgebbar ist. Zur Vereinfachung des Transportes bei gleichzeitiger Vermeidung von unruhigem Lauf im Betrieb ist vorgesehen, dass das zumindest eine lagefeste Abstützmittel 4 benachbart zur Stückgutführung 21 ausgebildet ist.

Dadurch ergeben sich - wie eingangs beschrieben - zahlreiche Vorteile und zahlreiche Möglichkeiten den Wender 1 an unterschiedliche Geometrien des Stückgutes 2 anzupassen und den Wender 1 platzschonender und für einen einfacheren Transport auszubilden. Weiters wird die Gefahr von im Betrieb des Wenders 1 auftretender Unwucht, insbesondere unwuchtbedingter Schwingungen, des Wenders 1 und/oder der Wenderanordnung, minimiert. Eine Wendeanlage dient zum Wenden von vorzugsweise länglichem Stückgut 2. Eine Wendeanlage umfasst in einer ersten - meist im Wesentlichen horizontalen - Ebene ein Transportmittel zum Antransport des zu wendenden Stückgutes 2 in Antransportrichtung 63, in einer zweiten - meist im Wesentlichen horizontalen - Ebene ein Transportmittel zum Abtransport des gewendeten Stückgutes 2 in Abtransportrichtung 64 und eine Wendeanordnung, in welcher das Stückgut 2 gewendet wird. Der Wender 1 erstreckt sich in Betriebslage gesehen in dessen Höhe zwischen der ersten Ebene und der zweiten Ebene und beim Durchtritt durch den Wender 1 ist die erste Seite 22 des Stückgutes 2 dem Wender 1 zugewandt.

Das erste Fördermittel 3 ist gegenüber dem Abstützmittel 4 bewegbar ausgebildet. Dadurch kann das erste Fördermittel 3 den Transport des Stückgutes 2 zumindest bereichsweise unterstützen und/oder führen. Insbesondere kann das erste Fördermittel 3 zumindest bereichsweise in Förderrichtung und mit Fördergeschwindigkeit bewegt werden. Die Zuverlässigkeit des Transportes des Stückgutes 2 im Wender 1 kann derart erhöht werden und Beschädigungen, insbesondere Riefen und/oder Schleifspuren, des Stückgutes 2 vermieden werden.

Vorteilhafterweise kann vorgesehen sein, dass die erste Stückgutführung 21 zwischen dem Aufnahmebereich 11 und dem Austrittsbereich 12 im Wesentlichen c-förmig ausgebildet ist. Die c-förmige erste Stückgutführung 21 ermöglicht die Aufnahme der ersten Seite 22 des Stückgutes 2 nach unten und die Ausgabe der ersten Seite 22 des Stückgutes 2 nach oben, wodurch ein Wenden des Stückgutes 2 um 180° entlang dessen Längserstreckung gewährleistet ist. Besonders vorteilhaft dabei sind eine halbkreisförmige oder eine c-förmige Geometrie der ersten Stückgutführung 21. Im Wesentlichen c-förmig kann bedeuten, dass andere Geometrieformen der ersten Stückgutführung 21 ausgebildet sind, wobei zur äquivalenten Wirkung - in Betriebslage gesehen - das Stückgut 2 im Aufnahmebereich 11 über der ersten Stückgutführung 21 und das Stückgut 2 im Austrittsbereich 12 unter der ersten Stückgutführung 21 anordenbar ist.

In vorteilhafter Weiterbildung der Erfindung kann das Abstützmittel 4 zwischen dem Aufnahmebereich 11 und dem Austrittsbereich 12 eine im Wesentlichen c-förmige Abstützung des ersten Fördermittels 3 ausbilden- Dadurch wird eine stetige erste Stückgutführung 21 ermöglicht, wodurch der Transport des Stückgutes 2 durch den Wender effizienter, mit geringer Störanfälligkeit und stückgutschonender erfolgen kann.

In besonders vorteilhafter Weise kann vorgesehen sein, dass das erste Fördermittel 3 zumindest ein Förderband 32 umfasst, insbesondere als ein Förderband 32 ausgebildet ist. Ein gleichmäßiger Lauf des ersten Fördermittels 3, insbesondere des Förderbandes 32, wird in diesem Zusammenhang durch das Abstützmittel 4 gewährleistet. Die Gefahr von Unwucht und Schwingungen während des Betriebes des Wenders 1 kann reduziert, die Laufruhe und die Lebensdauer erhöht werden.

Vorzugsweise kann das erste Fördermittel 3 als in Förderrichtung geschlossene Struktur 31 mit einer in Richtung der Abstützmittel 4 gerichtete Innenseite 35 und einer von der Abstützmittel 4 weggerichteten Außenseite 36 ausgebildet sein. Die Außenseite 36 der geschlossenen Struktur 31 ist konvex, vorzugsweise ringförmig, ausgebildet. Dabei bildet die Außenfläche 36 des Förderbandes 32 zwischen dem Aufnahmebereich 11 und dem Austrittsbereich 12 die Stückgutführung 21 aus. Dadurch kann das Stückgut 2, insbesondere die erste Seite 22 des Stückgutes 2, mit dem ersten Fördermittel 3 verschiebefest verbunden sein, sodass die Gefahr der Bildung von Schleifspuren und/oder Riefen an der ersten Seite 22 des Stückgutes 2 im Wender 1 minimiert und eine besonders einfache Geometrie des Fördermittels 3 ermöglicht wird.

Die Fig. 1 zeigt den erfindungsgemäßen Wenders 1 in einer bevorzugten Ausführungsform in schematischer Darstellung im Seitenriss. Diese Ausführungsform umfasst das erste Fördermittel 3, insbesondere die geschlossene Struktur 31, Befestigungseinrichtungen 43, das - in Betriebslage gesehen - unter dem Wender liegende Fundament 44 und mehrere Abstützmittel 4.

Die mehreren Abstützmittel 4 sind von einer Abstützvorrichtung 41 in der Lage fixiert gehalten. Die Abstützvorrichtung 41 ist bei dieser Ausführungsform im Wesentlichen kreisbogenförmig, insbesondere c-förmig, ausgebildet. Dadurch wird eine besonders einfache Ausgestaltung der Abstützvorrichtung 41 und des Wenders 1 ermöglicht.

Benachbarte Abstützmittel 4 können in etwa 10cm zueinander beabstandet angeordnet werden. Insbesondere kann der Abstand benachbarter Abstützmittel 4 in etwa der Hälfte der Erstreckung in Förderrichtung des zu befördernden Stückgutes 2 betragen. Dabei können die Abstützmittel 4 im Bereich der ersten Stückgutführung 21 im Wesentlichen alle 5°, insbesondere alle 3° entlang der kreisförmigen oder c-förmigen Stückgutführung 21 ausgebildet sein.

Vorzugsweise kann vorgesehen sein, dass die Abstützvorrichtung 41 das Abstützmittel 4 umfasst, und dass die Abstützvorrichtung 41 aus mehreren Abstützvorrichtungsmodulen, insbesondere aus zwei Abstützvorrichtungshälften, gebildet ist. Diese ermöglicht einen modularen Aufbau und eine einfache Wartung des Wenders 1. In diesem Zusammenhang kann in vorteilhafter Weiterbildung der Erfindung vorgesehen sein, dass die mehreren Abstützvorrichtungsmodule oder Abstützvorrichtungshälften gleichartig ausgebildet sind. Durch geringere Außenabmessungen und geringeres Gewicht der einzelnen Abstützvorrichtungsmodule im Vergleich zur gesamten Abstützvorrichtung 41, wird die Montage dieser vereinfacht. Die einzelnen Abstützvorrichtungsmodule können einfach und kostenschonend hergestellt werden. Der Transport der Anlage, welche nach der Montage eine Höhenabrnessung also eine Höhenerstreckung normal zu einer Standfläche 44 der Wendeanlage, von über 3m oder 4m erreichen kann, kann derart vereinfacht werden, da die einzelnen Abstützvorrichtungsmodule kompakter, also maximal 2m hoch, 2m breit und 1m tief, ausgebildet sein können. Dies spart Zeit und Kosten bei der Herstellung, beim Transport und bei der Montage des Wenders 1 und der Wendeanlage.

Ebenso kann in diesem Zusammenhang vorgesehen sein, dass - in Betriebslage gesehen - die beiden Abstützvorrichtungshälften spiegelsymmetrisch um eine Horizontale ausgebildet sind. Die Wendeanlage kann in mehrere Module geteilt werden, welche miteinander lösbar in Verbindung stehen. Die Module können vorfabriziert werden, sodass die Vor-Ort-Montage in vorteilhafter Weise einfach, zeit- und kostenschonend erfolgen kann. Da die Befestigungsmittel zwischen den einzelnen Modulen im Betrieb des Wenders nicht bewegt werden, so muss bei diesen nicht auf Unwucht geachtet werden und der Zusammenbau der Module kann einfach erfolgen. Somit können sowohl der Transport als auch die Montage vereinfacht werden, wobei die Gefahr von unwuchtbedingten Schwingungen und Belastungen des Wenders und/oder der Wendeanlage minimiert wird.

Die geschlossene Struktur 31 kann in einer vorteilhaften Weise einfach und kostenschonend als Förderband 32 ausgebildet sein. Vorteilhafterweise kann das zumindest eine Förderband 32 einen Zugstrang und einen Verschleißbereich umfassen, wobei der Verschleißbereich zum Kontakt mit dem Stückgut 2 vorgesehen sein kann. Der Verschleißbereich kann dabei weicher als das zu befördernde Stückgut 2 ausgebildet sein. Derart werden Beschädigungen am Stückgut 2 verhindert und eine sichere Führung wird ermöglicht. Der Zugstrang kann an der Innenseite 35 des Förderbandes 32 einen rauen und/oder zahnförmigen Bereich aufweisen und derart einen besonders sicheren Kontakt zum Abstützmittel 4 und/oder zum Antrieb sicherzustellen. Ebenso kann der Zugstrang an der Innenseite 35 des Förderbandes 32 einen mit einem Gleitmittel versehenen Bereich aufweisen, um in diesem Bereich einen niedrigen Reibungskoeffizienten zum Abstützmittel 4 und/oder zur Abstützvorrichtung 41 zu ermöglichen. Derart wird die Betriebssicherheit und die Zuverlässigkeit des Förderbandes 32 erhöht. Der Zugstrang kann ein Stahlseil umfassen und die im Betrieb auftretenden Zugkräfte aufnehmen. Der Verschleißbereich kann mit einer - insbesondere austauschbaren - Verschleißschicht ausgebildet sein.

Die geschlossene Struktur 31 kann auch Luftkammern enthalten, beispielsweise als Schlauch ausgebildet sein, wodurch das Gewicht weiter reduziert werden kann. Dadurch kann die Ausbildung von Schwingungen und Unwucht im Betrieb der Wendeanlage besonders wirkungsvoll verhindert werden und die geschlossene Struktur 31 kann kostenschonend und einfach hergestellt und einfach montiert werden.

Die geschlossene Struktur 31 wird durch mehrere Abstützmittel 4 bewegbar im Bereich der Stückgutführung 21 gehalten. Im Aufnahmebereich 1 und im Austrittsbereich 12 kann die geschlossene Struktur 31 auf einer Gleitfläche der Abstützvorrichtung 41 aufliegen. Das erste Fördermittel 3 zur Führung der ersten Seite 22 des Stückgutes 2 kann vorzugsweise von dem Aufnahmebereich 11 zu dem Austrittsbereich 12 ausgebildet sein.

In einer vorteilhaften Weiterbildung der Erfindung können zumindest bereichsweise eine seitliche Führung, vorzugsweise Führungsschienen, Führungsrippen, Zentrierlager und/oder Zentrierstifte, zur Führung des ersten Fördermittels 3 in Richtung der Normalen zur Förderrichtung ausgebildet sein. Eine einfache und betriebssichere Führung des ersten Fördermittels 3 wird auch bei im Betrieb gegebenenfalls auftretenden Seitenkräften sichergestellt und die Betriebssicherheit der Wendeanlage wird erhöht sowie die Auftrittswahrscheinlicbkeit von Fehlern und Beschädigungen am Stückgut 2 gesenkt.

Die dargestellte geschlossene Struktur 31 gemäß der Fig. 1 ist - wie oben ausgeführt - insbesondere kreisförmig ausgebildet. Dabei kann der Aufnahmebereich 11 entlang des Umfangs einen Winkel von 20° bis 45°, die Stückgutführung 21 entlang des Umfangs einen Winkel von 170° bis 200°, der Austrittsbereich 12 entlang des Umfangs einen Winkel von 20° bis 45°, sowie ein abstützungsfreier Bereich entlang des Umfangs einen Winkel von 60° bis 150° ausbilden. Dabei kann vorteilhafterweise vorgesehen sein, dass die geschlossene Struktur 31 entlang des Umfangs bereichsweise, insbesondere um einen Winkel größer 180°, durch die Abstützmittel 4 abgestützt angeordnet ist, und dass die geschlossene Struktur 31 entlang des Umfangs bereichsweise um einen Winkel kleiner 180°, vorzugsweise im Bereich von 80° bis 120°, abstützungsfrei angeordnet ist. Eine besonders sichere Führung und Abstützung der geschlossenen Struktur 31 sowie des zu wendenden Stückgutes 2 kann derart gewährleistet werden.

Die Abstützmittel 4 sind in Kontakt mit der Innenseite 35 des ersten Fördermittels 3. In vorteilhafter Weise kann das Abstützmittel 4 zumindest eine Gleitfläche, ein Gleitlager und/oder ein Wälzlager, insbesondere ein Nadellager und/oder ein Zylinderlager, umfassen. Bei der dargestellten vorteilhaften Ausführungsform der Erfindung sind im Bereich der ersten Stückgutführung 21 die Abstützmittel 4 als Lager, insbesondere Wälzlager, ausgebildet. Diese Rollen stehen in Kontakt mit der Innenseite 35 des ersten Fördermittels 3, insbesondere des Förderbandes 32. Wie ebenso dargestellt können die Abstützmittel 4 im Aufnahmebereich 11 und im Austrittsbereich 12 insbesondere als Gleitfläche ausgebildet sein. Dabei kann vorteilhafterweise das erste Fördermittel 3 ohne Antrieb, also antriebsfrei, ausgebildet sein.

In der Wenderanordnung kann zumindest ein zweites Fördermittel zum Zusammenwirken mit einer der ersten Seite 22 gegenüberliegenden zweiten Seite 23 des Stückgutes 2 ausgebildet sein. Die Zuverlässigkeit des Transportes dcs Stückgutes 2 durch den Wender 1 wird derart erhöht. Dabei kann das zumindest eine zweite Fördermittel zumindest ein Förderband 32 umfassen, insbesondere als Förderband 32 ausgebildet sein. Derart kann das zweite Fördermittel einfach und kostenschonend ausgebildet werden.

Vorteilhafterweise kann zumindest das zweite Fördemittel mit einer Antriebseinheit wirkverbunden sein. Der Transport des Stückgutes 2 im Wender 1 wird dadurch das zweite Fördermittel gewährleistet. Das erste Fördermittel 3 kann dabei vorteilhafterweise einfach und kostenschonend - insbesondere antriebsfrei - ausgebildet sein.

Die Längserstreckung des Wenders 1 kann in Richtung der Längserstreckung des zu befördernden Stückgutes 2 gerichtet sein. Entlang dieser Längserstreckung des Wenders 1 können das erste Fördermittel 3 und das zweite Fördermittel an gleicher Position angeordnet werden. Derart kann vorteilhafterweise das zweite Fördermittel dem ersten Fördermittel 3 gegenüberliegend angeordnet sein und zwischen dem ersten Fördermittel 3 und dem zweiten Fördermittel kann ein Führungsspalt zur Führung des Stückgutes 2 zwischen dem Aufnahmebereich 11 und dem Austrittsbereich 12 ausgebildet werden. Somit können die erste Seite 22 des Stückgutes 2 vom ersten Fördermittel 3 und die zweite Seite 23 des Stückgutes 2 vom zweiten Fördermittel geführt werden. Vorteilhafterweise bewegen sich beim Transport des Stückgutes 2 durch den Wender 1 die erste Seite 22 des Stückgutes 2 und das erste Fördermittel 3, sowie die zweite Seite 22 des Stückgutes 2 und das zweite Fördermittel mit jeweils selber Geschwindigkeit in Förderrichtung. Derart werden Relativbewegungen zwischen den ersten Fördermitteln 3 und den zweiten Fördermitteln und dem Stückgut 2 sowohl auf der ersten Seite 22 und auf der zweiten Seite 23 des Stückgutes 2 vermieden und ein besonders effizientes und stückgutschonendes Wenden des Stückgutes 2 wird ermöglicht. Auch hiezu kann das erste Fördermittel 3 und das zweite Fördermittel einfach und kostenschonend jeweils als Förderband 32 ausgebildet sein.

In vorteilhafter Weiterbildung kann vorgesehen sein, dass zumindest eine Spannvorrichtung zum Spannen des Fördermittels 3, insbesondere des Förderbandes 32, ausgebildet ist. Vorteilhafterweise umfasst die Spannvorrichtung ein Lager, eine Rolle und ist bewegbar entlang einer im Wesentlichen Normalen, also im Winkel zwischen 75° und 105°, zum Förderband 32, zur geschlossenen Struktur 31, insbesondere zum ringförmigen ersten Fördermittel 3- Mit einer vorbestimmten Federkraft wird das Förderband 32 gespannt, sodass dieses an sämtlichen Abstützmitteln 4 mit vorbestimmter Kraft anliegt. Eine ständige und im Wesentlichen gleichmäßige Kontaktkraft, von erstem Fördermittel 3, insbesondere Förderband 32, und Abstützmittel 4 ist derart gewährleistet. Dadurch können Schwingungen im Betrieb verringert, die Lebensdauer und die Betriebszuverlässigkeit der Wendeanlage kann erhöht werden.

In vorteilhafter Weiterbildung der Erfindung können mehrere, insbesondere gleichartige, erste Fördermittel 3 entlang einer Normalen zur Förderrichtung beabstandet angeordnet sein. Beispielsweise kann eine - nicht dargestellte - Ausführungsform des erfindungsgemäßen Wenders 1 vier, entlang der Längserstreckung des Stückgutes 2 anordenbare, also entlang einer Normalen zur Förderrichtung angeordnete, im Wesentlichen gleichartig ausgebildete erste Fördermittel 3 und vier entlang der Längserstreckung des Stückgutes 2 anordenbare, also normal zur Förderrichtung angeordnete, im Wesentlichen gleichartig ausgebildete zweite Fördermittel. Derart sind mehrere, insbesondere gleichartige, erste Fördermittel 3 entlang einer Normalen zur Förderrichtung beabstandet angeordnet. Entlang der Normalen zur Förderrichtung können ebenso zwei, drei, fünf oder mehr erste Fördermittel 3 und/oder zweite Fördermittel angeordnet sein. Dadurch kann längliches Stückgut 2, also mit einer Längserstreckung mehrerer Meter, sicher geführt und entlang dessen Längserstreckung gewendet werden. Die Breite der einzelnen ersten Fördermittel 3, also die Ausdehnung des Fördermittels 3 in Richtung der Normalen zur Förderrichtung, kann verringert werden. Dadurch kann das Gewicht des Wenders 1 und der bewegten Masse im Wender 1 weiter verringert werden. Die Gefahr von Unwucht des Wenders kann weiter verringert und die Zuverlässigkeit des Wenders kann weiter erhöht werden.

Vorteilhafterweise kann die Wendeanlage umfassend einen erfindungsgemäßen Wender 1 ausgebildet sein, wobei - in Betriebslage gesehen - ein drittes Fördermittel im Bereich des Aufnahmebereichs 11 zum Antransport in Antransportrichtung 63 des Stückgutes 2 ausgebildet ist, und ein viertes Fördermittel im Bereich des Austrittsbereichs 12 zum Abtransport in Abtransportrichtung 64 des Stückgutes 2 ausgebildet ist. Ein nahtloser Übergang beim Transport des Stückgutes 2 von Antransport, dem Wenden im Wender 1 bis zum Abtransport wird derart gewährleistet.

Ebenso kann ein Modul und/oder ein Bereich zur Schwingungsberuhigung des Fördermittels 3 und/oder des Wenders 1 am und/oder im Wender 1 angeordnet sein. Die modulare Bauweise kann den Einbau eines derartigen Modules unterstützen und das Modul kann einfach und schnell ausgetauscht werden, sodass der Wender 1 besser an unterschiedliche Größen 2 und/oder unterschiedliche Massen des Stückgutes 2 angepasst werden kann, womit Schwingungen im Betrieb des Wenders 1 reduziert werden können.

Im Weiteren kann besser auf geänderte Anforderungen beim Wenden eingegangen werden, wobei beispielsweise einzelne Module, insbesondere im Bereich der ersten Stückgutführung 21, hinzugefügt und/oder ausgetauscht werden, wodurch die Geometrie des Wenders 1 geändert und dem zu wendenden Stückgutes 2 angepasst werden kann. Wartung und Service des erfindungsgemäßen Wenders 1 kann vereinfacht werden, da beim Auftritt eines schadhaften Bauteiles einfach das betroffene Abstützvorrichtungsmodul ausgetauscht werden kann und/oder das schadhafte Abstützvorrichtungsmodul einfacher demontiert, abtransportiert, repariert und wieder montiert werden kann als ein kompletter Wender 1. Ausfallszeiten der Wendeanlage können minimiert werden und der Betrieb des Wenders 1 kann kostengünstig erfolgen.

In der Ansicht der Fig. 1 gesehen, kann die Abstützvorrichtung 41 insbesondere einen ersten Teilbereich 91 ausbilden, wobei der abstützfreie Bereich insbesondere einen zweiten Teilbereich 92 ausbilden kann. Der erste Teilbereich 91 und der zweite Teilbereich 92 bilden dabei zusammen einen vollen Winkel 360° um ein Zentrum 98 des Wenders 1 aus und umschließen derart das Zentrum 98. Insbesondere können - wie in der Fig. 1 dargestellt - der erste Teilbereich 91 zusammenhängend und der zweite Teilbereich 92 ebenso zusammenhängen ausgebildet sein, womit lediglich ein erster Teilbereich 91 und lediglich ein zweiter Teilbereich 92 das Zentrum 98 voll, also in, Seitenriss gesehen komplett, umschließen. Das erste Fördermittel 3 kann dabei insbesondere reifenförmig, bevorzugt ringförmig, ausgebildet sein und derart wie ein Ring, mit einem Außendurchmesser beispielsweise von 1m bis 6m, insbesondere von 2m bis 4m, auf die Abstützvorrichtung 41 aufgesteckt sein. Dabei kann das erste Fördermittel 3 insbesondere im abstützfreien Bereich, also im Bereich des zweiten Teilbereichs 92, kreisbogenförmig ausgebildet sein. Diese Form kann dabei insbesondere der spannungsfreien Geometrie des ersten FördermitteIs 3, insbesondere der geschlossenen Struktur 31, entsprechen, wozu die geschlossenen Struktur 31 in dessen spannungsfreien Zustand insbesondere ringförmig ausgebildet sein kann. Dadurch kann die besonders einfache Bewegung des Fördermittels 3, insbesondere mit besonders geringen mechanischen Spannungen, also Zugkräften und Druckkräften, im Fördermittel 3 gewährleistet werden.

Im Bereich des ersten Teilbereichs 91 kann das erste Fördermittel 3, insbesondere die geschlossene Struktur 31, auch in eine von der - in der Ansicht der Fig. 1 gesehen - Kreisbogenform abweichende Form, beispielsweise die Ellipsenbogenform oder die C-Bogenform, gebracht werden, wobei diese Form insbesondere durch die Kontur der Abstützvorrichtung 41 bewirkt werden kann, wobei das Fördermittel 3 aufgrund dessen Verformbarkeit der Kontur der Abstützvorrichtung 41 folgt. Dadurch kann eine nahezu beliebige Kontur der Stückgutführung 21 gewährleistet werden.

Das bewegliche erste Fördermittel 3 kann in vorteilhafter Weise um das Zentrum 98 im Wesentlichen rotierbar gelagert sein. Dabei kann sich das erste Fördermittel 3, insbesondere die geschlossene Struktur 31, bevorzugt das Förderband 32, in der Seitenansicht gesehen im Wesentlichen in Richtung eines Umdrehungssinns 99, insbesondere um das Zentrum 98, drehen und somit um sich selbst. Bei der Förderung der Stückgüter 2 im Bereich der Stückgutführung 21 wird dabei das Stückgut 2 in diesem Umdrehungssinn 99 gefordert.

Bei einer Rückförderung der Stückgüter 2 - als vom Austrittsbereich 12 zum Aufnahmebereich 1.1 durch den Wender 1 hindurch - kann sich das erste Fördermittel 3 dabei entgegen dem Umdrehungssinn 99, insbesondere ums Zentrum 98, drehen.

Der Wender 1 kann dabei zur Förderung des Stückgutes 2 in Förderrichtung gleich dem Umdrehungssinn 99 und zur Förderung des Stückgutes 2 in Rückförderrichtung entgegen dem Umdrehungssinn 99 ausgebildet sein. Der Umdrehungssinn 99 kann auch als Umdrehungsrichtung oder als Umdrehungsrichtungssinn bezeichnet werden.

In allen diesen Fällen ist die Außenseite 36 der geschlossenen Struktur 31, bevorzugt des Förderbandes 32, sowohl im Bereich der Abstützvorrichtung 41, also im ersten Teilbereich 91, als auch im abstützungsfreien Bereich, also im zweiten Teilbereich 92, konvex, also nach außen gewölbt, ausgebildet, wobei die geschlossene Struktur 31 - in der Seitenansicht gesehen - überall entlang dessen Außenseite 36 konvex ausgebildet ist. In der Seitenansicht ist die geschlossene Struktur 31 dabei ellipsenförmig oder - wie in der Fig. 1 dargestellt - kreisförmig, insbesondere ringförmig, ausgebildet. Die geschlossene Struktur 31 ist dabei an deren Innenseite 35 -- bevorzugt überall- konkav ausgebildet. Die geschlossene Struktur 31 ist in diesem Zusammenhang in der Betriebslage - und wie im Seitenriss in Fig. 1 dargestellt - im Wesentlichen überall entlang dessen in sich geschlossenen Umfangs zum Zentrum 98 hin gebogen ausgebildet und umschließt derart das Zentrum 98.

Dies ist insbesondere bei dem in Fig. 1 dargestellten ersten Fördermittels 3 der besonders bevorzugten Ausbildungsform der Fall, welches - in der Seitenansicht gesehen - ringförmig ausgebildet ist. Das ersten Fördermittels 3 kann dabei als flacher Reifen, insbesondere als der Ring, ausgebildet sein, welcher auf die Abstützvorrichtung 41 aufgesteckt ist und welcher sich um die Abstützvorrichtung 41 und um das Zentrum 98 im Umdrehungssinn 99 oder entgegen dem Umdrehungssinn 99 dreht. Da dabei lediglich der flache Reifen, insbesondere der Ring, bewegt ist, so ist hiebei die bewegte Masse des Wenders 1 gering, womit insbesondere die eingangs genannten Vorteile und vorteilhaften Wirkungen gewährleistet werden können.

Dabei kann das erste Fördermittel 3 in einer besonders vorteilhaften Ausbildung als geschlossene Struktur 31 derart ausgebildet sein, dass das erste Fördermittel 3 in der Betriebslage - im Seitenriss gesehen - als kreisförmiger und/oder elliptischer Ring ausgebildet ist. Die besonders einfache Bewegung des ersten Fördermittels 3, und dabei bei besonders geringen mechanischen Spannungen im ersten Fördermittel 3, kann dadurch gewährleistet sein. Insbesondere kann somit eine hohe Haltbarkeit sowie eine hohe Bewegungsgeschwindigkeit des ersten Fördermittels 3 gewährleistet sein. Da der Großteil des Wenders 1 dabei ortsfest und stillstehend angeordnet ist kann auch das Auftreten störender Unwucht zuverlässig vermieden werden, wobei insbesondere bei einem als kreisförmiger kreisförmigen Ring störende Unwuchten zuverlässig vermieden werden können.

Der kreisförmige und/oder elliptische Ring kann dabei - wie ebenso in Fig. 1 dargestellt - zu wenigstens 180° entlang dessen Umfang der Abstützvorrichtung 41 gestützt sein entlang des restlichen Umfangs abstützungsfrei und derart ungelagert sein. Derart kann die geschlossene Struktur 31 besonders einfach mittels der Abstützvorrichtung 41 und der lagefestes Abstützmittel 4 gestützt und in Position gehalten sein, wobei die Abstützvorrichtung 41, die Abstützmittel 4, die geschlossene Struktur 31 und somit der Wender 1 insgesamt besonders einfach, leicht und kostenschonend ausgebildet sein kann.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Wender (1) zum Wenden von länglichem Stückgut (2) im Quertransport, insbesondere Platten, Leisten und/oder Brettern, umfassend einen Aufnahmebereich (11) zur Aufnahme des Stückgutes (2), einen Austrittsbereich (12) zum Austritt des Stückgutes (2), eine erste Stückgutführung (21) zur Führung einer ersten Seite (22) des Stückgutes (2) von dem Aufnahmebereich (11) zu dem Austrittsbereich (12), wobei die erste Stückgutführung (21) wenigstens bereichsweise als geschlossene Struktur (31) ausgebildetes erstes Fördermittel (3) ausgebildet ist, sowie zumindest ein lagefestes Abstützmittel (4) zur Abstützung des ersten Fördermittels (3), wobei das erste Fördermittel (3) gegenüber dem Abstützmittel (4) bewegbar ausgebildet ist, wobei - in Betriebslage gesehen - das Stückgut (2) vom Aufnahmebereich (11) mit der ersten Seite (22) nach unten aufnehmbar ist und im Austrittsbereich (12) mit der ersten Seite (22) nach oben ausgebbar ist, und wobei das zumindest eine lagefeste Abstützmittel (4) benachbart zur Stückgutführung (21) ausgebildet ist, **dadurch gekennzeichnet, dass** eine von dem Abstützmittel (4) weggerichtete Außenseite (36) der geschlossenen Struktur (31) überall entlang der Außenseite (36) konvex ausgebildet ist.

2. Wender nach Anspruch 1, **dadurch gekennzeichnet, dass** das erste Fördermittel (3) ringförmig ausgebildet ist.

3. Wender nach Anspruch 1 oder 2, **dadurch gekennzeichnet, dass** die erste Stückgutführung (21) zwischen dem Aufnahmebereich (11) und dem Austrittsbereich (12) im Wesentlichen c-förmig ausgebildet ist.

4. Wender nach Anspruch 1, 2 oder 3, **dadurch gekennzeichnet, dass** das Abstützmittel (4) zwischen dem Aufnahmebereich (11) und dem Austrittsbereich (12) eine im Wesentlichen c-förmige Abstützung des ersten Fördermittels (3) ausbildet.

5. Wender nach einem der vorhergehenden Ansprüche, **dadurch gekennzeichnet, dass** das erste Fördermittel (3) zur Führung der ersten Seite (22) des Stückgutes (2) von dem Aufnahmebereich (11) zu dem Austrittsbereich (12) ausgebildet ist.

6. Wender nach einem der vorhergehenden Ansprüche, **dadurch gekennzeichnet, dass** eine Abstützvorrichtung (41) das Abstützmittel (4) umfasst, und dass die Abstützvorrichtung (41) aus mehreren Abstützvorrichtungsmodulen, insbesondere aus zwei Abstützvorrichtungshälften, gebildet ist.

7. Wender nach Anspruch 6, **dadurch gekennzeichnet, dass** die mehreren Abstützvorrichtungsmodule oder Abstützvorrichtungshälften gleichartig ausgebildet sind.

8. Wender nach Anspruch 6 oder 7, **dadurch gekennzeichnet, dass** - in Betriebslage gesehen - die beiden Abstützvorrichtungshälften spiegelsymmetrisch um eine Horizontale ausgebildet sind.

9. Wender nach einem der vorhergehenden Ansprüche, **dadurch gekennzeichnet, dass** mehrere, insbesondere gleichartige, erste Fördermittel (3) entlang einer Normalen zur Förderrichtung beabstandet angeordnet sind.

10. Wender nach einem der vorhergehenden Ansprüche, **dadurch gekennzeichnet, dass** das erste Fördermittel (3) als in Förderrichtung geschlossene Struktur (31) mit einer in Richtung der Abstützung (4) gerichteten Innenseite und einer von der Abstützung (4) weggerichteten Außenseite ausgebildet ist, und dass die Außenseite der geschlossenen Struktur (31) konvex, vorzugsweise ringförmig, ausgebildet ist.

11. Wender nach Anspruch 10, **dadurch gekennzeichnet, dass** die geschlossene Struktur (31) entlang des Umfangs bereichsweise, insbesondere um einen Winkel größer 180°, durch die Abstützung (4) abgestützt angeordnet ist, und dass die geschlossene Struktur (31) entlang des Umfangs bereichsweise um einen Winkel kleiner 180°, vorzugsweise im Bereich von 80° bis 120°, abstützungsfrei angeordnet ist.

12. Wender nach einem der vorhergehenden Ansprüche, **dadurch gekennzeichnet, dass** das erste Fördermittel (3) zumindest ein Förderband (32) umfasst, insbesondere als ein Förderband (32) ausgebildet ist.

13. Wender nach einem der vorhergehenden Ansprüche, **dadurch gekennzeichnet, dass** das Abstützmittel (4) zumindest eine Grleitfläche, ein Gleitlager und/oder ein Wälzlager, insbesondere ein Nadellager und/oder ein Zylinderlager, umfasst.

14. Wender nach einem der vorhergehenden Ansprüche, **dadurch gekennzeichnet, dass** zumindest eine Spannvorrichtung zum Spannen des ersten Fördermittels (3), insbesondere des Förderbandes (32), ausgebildet ist.

15. Wender nach einem der Ansprüche 12, 13 oder 14, **dadurch gekennzeichnet, dass** das zumindest eine Förderband (32) einen Zugstrang und einen Verschleißbereich umfasst, und dass der Verschleißbereich zum Kontakt mit dem Stückgut (2) vorgesehen ist.

16. Wender nach einem der vorhergehenden Ansprüche, **dadurch gekennzeichnet, dass** das erste Fördermittel (3) antriebsfrei ausgebildet, insbesondere gelagert, ist.

17. Wender nach einem der Ansprüche 2 bis 16, **dadurch gekennzeichnet, dass** zumindest bereichsweise eine seitliche Führung, vorzugsweise Führungsschienen, Führungsrippen, Zentrierlager und/oder Zentrierstifte, zur Führung des ersten Fördermittels (3) in Richtung der Normalen zur Förderrichtung ausgebildet ist.

18. Wender nach einem der vorhergehenden Ansprüche, **dadurch gekennzeichnet, dass** zumindest ein zweites Fördermittel zum Zusammenwirken mit einer der ersten Seite (22) gegenüberliegenden zweiten Seite (23) des Stückgutes (2) ausgebildet ist.

19. Wender nach Anspruch 18, **dadurch gekennzeichnet, dass** das zumindest eine zweite Fördermittel zumindest ein Förderband (32) umfasst, insbesondere als Förderband (32) ausgebildet ist.

20. Wender nach Anspruch 18 oder 19, **dadurch gekennzeichnet, dass** das zweite Fördermittel dem ersten Fördermittel (3) gegenüberliegend angeordnet ist, und dass zwischen dem ersten Fördermittel (3) und dem zweiten Fördermittel ein Führungsspalt zur Führung des Stückgutes (2) zwischen dem Aufnahmebereich (11) und dem Austrittsbereich (12) ausgebildet ist.

21. Wender nach einem der Ansprüche 18 bis 20, **dadurch gekennzeichnet, dass** zumindest das zweite Fördermittel mit einer Antriebseinheit wirkverbunden ist.

22. Wendeanlage umfassend einen Wender nach einem der Ansprüche 1 bis 21, **dadurch gekennzeichnet, dass** - in Betriebslage gesehen - ein drittes Fördermittel im Bereich des Aufnahmebereichs (11) zum Antransport des Stückgutes (2) ausgebildet ist, und dass ein viertes Fördermittel im Bereich des Austrittsbereichs (12) zum Abtransport des Stückgutes (2) ausgebildet ist.

## Claims

1. A reverser (1) for reversing elongated piece goods (2) in transverse transport, especially panels, strips and/or planks, comprising a receiving area (11) for receiving the piece good (2), a discharge area (12) for discharging the piece goods (2), a first piece goods guide (21) for guiding a first side (22) of the piece goods (2) from the receiving area (11) to the discharge area (12), with the first piece goods guide (21) being arranged at least in part as a first conveying means (3) arranged as a closed structure (31), and at least one support means (4) which is fixed in position for supporting the first conveying means (3), with the first conveying means (3) being arranged to be movable in relation to the support means (4), with the piece goods (2), as seen in the operating position, being receivable by the receiving area (11) with the first side (22) downwardly and being deliverable in the discharge area (12) with the first side (22) upwardly, and with the at least one support means (4) fixed in position being arranged adjacent to the piece goods guide (21), **characterized in that** an exterior (36) of the closed structure (31) facing away from the support means (4) is arranged in a convex way everywhere along the exterior (36).

2. A reverser according to claim 1, **characterized in that** the first conveying means (3) is arranged annularly.

3. A reverser according to claim 1 or 2, **characterized in that** the first piece goods guide (21) is substantially C-shaped between the receiving area (11) and the discharge area (12).

4. A reverser according to claim 1, 2 or 3, **characterized in that** the support means (4) forms a substantially C-shaped support of the first conveying means (3) between the receiving area (11) and the discharge area (12).

5. A reverser according to one of the preceding claims, **characterized in that** the first conveying means (3) is arranged for guiding the first side (22) of the piece goods (2) from the receiving area (11) to the discharge area (12).

6. A reverser according to one of the preceding claims, **characterized in that** a support apparatus (41) comprises the support means (4), and the support apparatus (41) is formed by several support apparatus modules, especially by two support apparatus halves.

7. A reverser according to claim 6, **characterized in that** the several support apparatus modules or support apparatus halves are arranged in a similar way.

8. A reverser according to claim 6 or 7, **characterized in that** as seen in the operating position the two support apparatus halves are arranged in a mirror-symmetrical manner around a horizontal line.

9. A reverser according to one of the preceding claims, **characterized in that** several, especially identical, conveying means (3) are arranged spaced from one another along a normal line in relation to the conveying direction.

10. A reverser according to one of the preceding claims, **characterized in that** the first conveying means (3) is arranged as a structure (31) which is closed off in the conveying direction and with an inside facing in the direction of the support (4) and with an outside facing away from the support (4), and the outside of the closed structure (31) is arranged in a convex way, preferably in an annular way.

11. A reverser according to claim 10, **characterized in that** the closed structure (31) is arranged to be supported by the support (4) along the circumference in part, especially about an angle of larger than 180°, and the closed structure (31) is arranged in a non-supported way along the circumference in part about an angle of less than 180°, preferably in the range of 80° to 120°;

12. A reverser according to one of the preceding claims, **characterized in that** the first support means (3) comprises at least one conveyor belt (32), and it is especially arranged as a conveyor belt (32).

13. A reverser according to one of the preceding claims, **characterized in that** the support means (4) comprises at least one sliding surface, a sliding bearing and/or a rolling bearing, especially a needle roller bearing and/or plain-roller bearing.

14. A reverser according to one of the preceding claims, **characterized in that** at least one tensioning apparatus is arranged for tensioning the first conveying means (3), especially the conveyor belt (32).

15. A reverser according to one of the claims 12, 13 or 14, **characterized in that** the at least one conveyor belt (32) comprises a tension member and a wearing area, and the wearing area is provided for contact with the piece goods (2).

16. A reverser according to one of the preceding claims, **characterized in that** the first support means (3) is arranged to be free from any drive, especially it runs on bearings.

17. A reverser according to one of the claims 2 to 16, **characterized in that** a lateral guide, preferably guide rails, guide ribs, locating bearings and/or centering pins, is arranged at least in part for guiding the first conveying means (3) in the direction of the normal line relative to the conveying direction.

18. A reverser according to one of the preceding claims, **characterized in that** at least one second conveying means is arranged for cooperating with a second side (23) of the piece goods (2) which is disposed opposite of the first side (22).

19. A reverser according to claim 18, **characterized in that** the at least one second conveying means comprises at least a conveyor belt (32), and it is especially arranged as a conveyor belt (32).

20. A reverser according to claim 18 or 19, **characterized in that** the second conveying means is arranged opposite of the first conveying means (3), and a guide gap for guiding the piece goods (2) between the receiving area (11) and the discharge area (12) is arranged between the first conveying means (3) and the second conveying means.

21. A reverser according to one of the claims 18 to 20, **characterized in that** at least the second conveying means is operatively connected with a drive unit.

22. A reverser installation, comprising a reverser according to one of the claims 1 to 21, **characterized in that** as seen in the operating position a third conveying means is arranged in the region of the receiving area (11) for loading the piece goods (2), and a fourth conveying means is arranged in the region of the discharge area (12) for removing the piece goods (2).

## Revendications

1. Dispositif de retournement (1) pour le retournement d'articles allongés (2) transportés dans le sens transversal, en particulier de plaques, de bandes et/ou de planches, comprenant une zone de prise en charge (11) pour la prise en charge des articles (2), une zone de sortie (12) pour la sortie des articles (2), un premier guide pour les articles (21) pour le guidage d'un premier côté (22) des articles (2) de la zone de prise en charge (11) à la zone de sortie (12), le premier guide pour les articles (21) étant conformé au moins par zones comme un moyen de transport (3) conformé comme une structure fermée (31), ainsi qu'au moins un moyen d'appui (4) stationnaire pour l'appui du premier moyen de transport (3), le premier moyen de transport (3) étant mobile par rapport au moyen d'appui (4), dans lequel les articles (2) peuvent être pris en charge, vus dans la position de fonctionnement, dans la zone de prise en charge (11) avec le premier côté (22) vers le bas et déposés dans la zone de sortie (12) avec le premier côté (22) vers le haut, et dans lequel l'au moins un moyen d'appui (4) stationnaire est formé à proximité du guide pour les articles (21), **caractérisé en ce qu'**une face extérieure (36) de la structure fermée (31) orientée à l'opposé du moyen d'appui (4) a une forme convexe sur toute la longueur de la face extérieure (36).

2. Dispositif de retournement selon la revendication 1, **caractérisé en ce que** le premier moyen de transport (3) a une forme annulaire.

3. Dispositif de retournement selon la revendication 1 ou 2, **caractérisé en ce que** le premier guide pour les articles (21) est sensiblement en forme de C entre la zone de prise en charge (11) et la zone de sortie (12).

4. Dispositif de retournement selon la revendication 1, 2 ou 3, **caractérisé en ce que** le moyen d'appui (4) forme entre la zone de prise en charge (11) et la zone de sortie (12) un appui sensiblement enforme de C pour le premier moyen de transport (3).

5. Dispositif de retournement selon l'une des revendications précédentes, **caractérisé en ce que** le premier moyen de transport (3) est conformé pour guider le premier côté (22) des articles (2) de la zone de prise en charge (11) à la zone de sortie (12).

6. Dispositif de retournement selon l'une des revendications précédentes, **caractérisé en ce qu'**un dispositif d'appui (41) comprend le moyen d'appui (4) et **en ce que** le dispositif d'appui (41) est formé de plusieurs modules de dispositif d'appui, en particulier de deux moitiés de dispositif d'appui.

7. Dispositif de retournement selon la revendication 6, **caractérisé en ce que** les multiples modules de dispositif d'appui ou moitiés de dispositif d'appui sont de construction identique.

8. Dispositif de retournement selon la revendication 6 ou 7, **caractérisé en ce que**, vus dans la position de fonctionnement, les deux moitiés de dispositif d'appui sont symétriques en miroir par rapport à une ligne horizontale.

9. Dispositif de retournement selon l'une des revendications précédentes, **caractérisé en ce que** plusieurs premiers moyens de transport (3), en particulier identiques, sont disposés à distance le long d'une ligne perpendiculaire au sens de transport.

10. Dispositif de retournement selon l'une des revendications précédentes, **caractérisé en ce que** le premier moyen de transport (3) est conformé comme une structure (31) fermée dans le sens de transport avec une face intérieure orientée en direction de l'appui (4) et une face extérieure orientée à l'opposé de l'appui (4), et **en ce que** la face extérieure de la structure fermée (31) a une forme convexe, de préférence annulaire.

11. Dispositif de retournement selon la revendication 10, **caractérisé en ce que** la structure fermée (31) est disposée en étant soutenue par zones par l'appui (4) le long de la circonférence, en particulier sur un angle supérieur à 180°, et **en ce que** la structure fermée (31) est disposée sans appui le long de la circonférence, par zones, sur un angle inférieur à 180°, de préférence compris entre 80° et 120°.

12. Dispositif de retournement selon l'une des revendications précédentes, **caractérisé en ce que** le premier moyen de transport (3) comprend au moins une bande transporteuse (32) et est en particulier conformé comme une bande transporteuse (32).

13. Dispositif de retournement selon l'une des revendications précédentes, **caractérisé en ce que** le moyen d'appui (4) comprend au moins une surface de glissement, un palier à glissement et/ou un palier à roulement, en particulier un roulement à aiguilles et/ou un roulement à rouleaux cylindriques.

14. Dispositif de retournement selon l'une des revendications précédentes, **caractérisé en ce qu'**au moins un dispositif de mise en tension est formé pour la mise en tension du premier moyen de transport (3), en particulier de la bande transporteuse (32).

15. Dispositif de retournement selon l'une des revendications 12, 13 ou 14, **caractérisé en ce que** l'au moins une bande transporteuse (32) comprend un brin de traction et une zone d'usure, et **en ce que** la zone d'usure est prévue pour le contact avec les articles (2).

16. Dispositif de retournement selon l'une des revendications précédentes, **caractérisé en ce que** le premier moyen de transport (3) est conçu sans entraînement, en particulier supporté.

17. Dispositif de retournement selon l'une des revendications 2 à 16, **caractérisé en ce qu'**un guidage latéral, de préférence des rails de guidage, des nervures de guidage, des paliers de centrage et/ou des goupilles de centrage, est prévu au moins par zones pour le guidage du premier moyen de transport (3) en direction de la ligne perpendiculaire au sens de transport.

18. Dispositif de retournement selon l'une des revendications précédentes, **caractérisé en ce qu'**au moins un deuxième moyen de transport est formé pour coopérer avec un deuxième côté (23) opposé au premier côté (22) des articles (2).

19. Dispositif de retournement selon la revendication 18, **caractérisé en ce que** l'au moins un deuxième moyen de transport comprend au moins une bande transporteuse (32) et est en particulier conformé comme une bande transporteuse (32).

20. Dispositif de retournement selon la revendication 18 ou 19, **caractérisé en ce que** le deuxième moyen de transport est disposé en face du premier moyen de transport (3) et **en ce qu'**est formé entre le premier moyen de transport (3) et le deuxième moyen de transport une fente de guidage pour le guide pour les articles (2) entre la zone de prise en charge (11) et la zone de sortie (12).

21. Dispositif de retournement selon l'une des revendications 18 à 20, **caractérisé en ce que** le deuxième moyen de transport, au moins, est en liaison active avec une unité d'entraînement.

22. Installation de retournement comprenant un dispositif de retournement selon l'une des revendications 1 à 21, **caractérisée en ce que**, vu dans la position de fonctionnement, un troisième moyen de transport est formé au niveau de la zone de prise en charge (11) pour amener les articles allongés (2) et **en ce qu'**un quatrième moyen de transport est formé au niveau de la zone de sortie (12) pour évacuer les articles (2).
